# EUROPÄISCHE PATENTSCHRIFT

(11) **EP 2 109 628 B1**
(45) Veröffentlichungstag und Bekanntmachung des Hinweises auf die Patenterteilung: **14.03.2018**
(21) Anmeldenummer: 08701281.1
(22) Anmeldetag: 08.01.2008
(51) Int. Cl.: C08F 2/14, C08F 220/06, A61L 15/00

(54) **VERFAHREN ZUR HERSTELLUNG WASSERABSORBIERENDER POLYMERPARTIKEL DURCH SUSPENSIONSPOLYMERISATION**
METHOD FOR PRODUCING WATER-ABSORBING POLYMER PARTICLES BY SUSPENSION POLYMERISATION
PROCÉDÉ DE PRODUCTION DE PARTICULES POLYMÈRES ABSORBANT L'EAU PAR POLYMÉRISATION EN SUSPENSION

(30) Priorität: 11.01.2007 EP 07100421
(43) Veröffentlichungstag der Anmeldung: 21.10.2009
(73) Patentinhaber: BASF SE, 67056 Ludwigshafen am Rhein (DE)
(72) Erfinder: FUNK, Rüdiger, 65527 Niedernhausen (DE)
(74) Vertreter: BASF IP Association
(86) Internationale Anmeldenummer: PCT/EP2008/050105
(87) Internationale Veröffentlichungsnummer: WO 2008/084031

(56) Entgegenhaltungen:
- WO-A-2006/014031
- JP-A- 63 218 702
- US-A- 4 818 792

## Beschreibung

Die vorliegende Erfindung betrifft ein Verfahren zur Herstellung wasserabsorbierender Polymerpartikel durch Suspensionspolymerisation mit Rückführung des hydrophoben Lösungsmittels, wobei das hydrophobe Lösungsmittel verzweigte gesättigte aliphatische Kohlenwasserstoffe enthält.

Die Herstellung wasserabsorbierender Polymerpartikel wird in der Monographie "Modern Superabsorbent Polymer Technology", F.L. Buchholz und A.T. Graham, Wiley-VCH, 1998, Seiten 69 bis 117, beschrieben. Die wasserabsorbierenden Polymerpartikel werden üblicherweise durch Lösungspolymerisation oder Suspensionspolymerisation hergestellt.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität.

Zur Verbesserung der Anwendungseigenschaften, wie beispielsweise Flüssigkeitsweiterleitung im gequollenen Gelbett (SFC) in der Windel und Absorption unter Druck (AUL), werden wasserabsorbierende Polymerpartikel im allgemeinen nachvernetzt. Dadurch steigt nur der Vernetzungsgrad der Partikeloberfläche, wodurch die Absorption unter Druck (AUL) und die Zentrifugenretentionskapazität (CRC) zumindest teilweise entkoppelt werden können.

JP S63-218702 beschreibt ein kontinuierliches Verfahren zur Herstellung wasserabsorbierender Polymerpartikel durch Suspensionspolymerisation.

Aufgabe der vorliegenden Erfindung war die Bereitstellung eines verbesserten Verfahrens zur Herstellung wasserabsorbierender Polymerpartikel durch Suspensionspolymerisation.

Gelöst wurde die Aufgabe durch ein Verfahren zur Herstellung wasserabsorbierender Polymerpartikel durch Suspensionspolymerisation in einem hydrophoben Lösungsmittel, umfassend
i) Dosierung einer Monomerlösung mittels mindestens einer Zuleitung in einen Rührreaktor,
ii) Abtrennung des hydrophoben Lösungsmittels von den erhaltenen wasserabsorbierenden Polymerpartikeln und
iii) Rückführung des abgetrennten hydrophoben Lösungsmittels in das Verfahren,
dadurch gekennzeichnet, dass das hydrophobe Lösungsmittel zumindest teilweise durch frisches hydrophobes Lösungsmittel ersetzt wird, das frische hydrophobe Lösungsmittel zumindest teilweise ein Kohlenwasserstoffgemisch ist und das Kohlenwasserstoffgemisch mindestens 1 Gew.-% verzweigte gesättigte aliphatische Kohlenwasserstoffe enthält.

Hydrophobe Lösungsmittel weisen bei 23 °C eine Löslichkeit in Wasser zu weniger als 5 g/100 g, vorzugsweise weniger als 1 g/100 g, besonders bevorzugt weniger als 0,5 g/100 g, auf.

Als frisches hydrophobes Lösungsmittel im Sinne der vorliegenden Erfindung wird hydrophobes Lösungsmittel bezeichnet, das dem Verfahren von außen zugeführt wird. Im Gegensatz dazu wurde rückgeführtes hydrophobes Lösungsmittel bereits im Verfahren verwendet.

Das frische hydrophobe Lösungsmittel enthält vorzugsweise mindesten 50 Gew.-%, besonders bevorzugt mindesten 75 Gew.-%, ganz besonders bevorzugt mindestens 90 Gew.-%, eines Kohlenwasserstoffgemisches. Das frische hydrophobe Lösungsmittel kann auch selber ein Kohlenwasserstoffgemisch sein.

Verzweigte gesättigte aliphatische Kohlenwasserstoffe sind Kohlenwasserstoffe mit tertiären und quartären Kohlenstoffatomen, wie 2-Methylpentan, 3-Methylpentan, 2,2-Dimethylpentan, Methylcyclopentan, 2,4-Dimethylpentan, 2,2,3-Trimethylbutan, 3,3-Dimethylpentan, 2-Methylhexan, 2,3-Dimethylpentan, 1,1-Dimethylcyclopentan, 3-Methylhexan, cis-1,3-Dimethylcyclopentan, trans-1,3-Dimethylcyclopentan, 3-Ethylpentan, trans-1,2-Dimethylcyclopentan, 2,2,4-Trimethylpentan, Methylcyclohexan, cis-1,2-Dimethylcyclopentan, 1,1,3-Trimethylcyclopentan, 2,2-Dimethylhexan, Ethylcyclopentan, 2,5-Dimethylhexan, 2,2,3-Trimethylpentan, 2,4-Dimethylhexan, trans-cis-1,2,4-Trimethylcyclopentan, 3,3-Dimethylhexan, trans-cis-1,2,3-Trimethylcyclopentan, 2,3,4-Trimethylpentan, 2,3,3-Trimethylpentan, 1,1,2-Trimethylcyclopentan, 2,3-Dimethylhexan, 2-Methyl-3-ethylpentan, 2-Methylheptan, 4-Methylheptan, 3-Methyl-3-ethylpentan, 3,4-Dimethylhexan, cis-trans-1,2,4-Trimethylcyclopentan, cis-cis-1,2,4-Trimethylcyclopentan, cis-1,3-Dimethylcyclohexan, 3-Methylheptan, cis-trans-1,2,3-Trimethylcyclopentan, 3-Ethylhexan, trans-1,4-Dimethylcyclohexan, 1,1-Dimethylcyclohexan, 2,2,5-Trimethylhexan, trans-1-Ethyl-3-methylcyclopentan, cis-1-Ethyl-3-methylcyclopentan, trans-1-Ethyl-2-methylcyclopentan, 2,2,4-Trimethylhexan, 1-Ethyl-1-methylcyclopentan, trans-1,2-Dimethylcyclohexan, cis-cis-1,2,3-Trimethylcyclopentan, trans-1,3-Dimethylcyclohexan, cis-1,4-Dimethylcyclohexan, l-sopropylcyclopentan, 2,4,4-Trimethylhexan, cis-1-Ethyl-2-methylcyclopentan, 2,3,5-Trimethylhexan, 2,2-Dimethylheptan, cis-1,2-Dimethylcyclohexan, 2,2,3-Trimethylhexan, 2,4-Dimethylheptan, 4,4-Dimethylheptan, Ethylcyclohexan, n-Propylcyclopentan, 2-Methyl-4-ethylhexan, 2,6-Dimethylheptan, 1,1,3-Trimethylcyclohexan, 2,5-Dimethylheptan, 3,5-Dimethylheptan, 3,3-Dimethylheptan, 2,3,4-Trimethylhexan, 2,3-Dimethylheptan, 3,4-Dimethylheptan, 4-Ethylheptan, 4-Methyloktan, 2-Methyloktan, 3-Ethylheptan, 3-Methyloktan, 1,1,2-Trimethylcyclohexan und 2,4,6-Trimethylheptan.

Insbesondere Kohlenwasserstoffe mit tertiären Kohlenstoffatomen sind bekannte Polymerisationsregler. Polymerisationsregler terminieren eine wachsende Polymerkette und starten zeitverzögert eine neue Polymerisationskette. Dieser Eingriff in die Polymerisationskinetik führt zu kürzeren Polymerketten. Dies ist bei der Herstellung von langkettigen Polymeren, insbesondere bei der Herstellung wasserabsorbierender Polymere, unerwünscht. Daher wurden zur Herstellung wasserabsorbierender Polymere durch Suspensionspolymerisation bislang nur hydrophobe Lösungsmittel eingesetzt, die frei von verzweigten gesättigten aliphatischen Kohlenwasserstoffen waren.

Der vorliegenden Erfindung liegt die Erkenntnis zugrunde, dass geringe Konzentrationen verzweigter gesättigter aliphatischer Kohlenwasserstoffe toleriert werden können und dass verzweigte gesättigte aliphatische Kohlenwasserstoffe während der Polymerisation teilweise zerstört werden, wobei mit jedem Zyklus die Konzentration verzweigter gesättigter aliphatischer Kohlenwasserstoffe weiter fällt.

Daher können in einer Suspensionspolymerisation mit Lösungsmittelrückführung die Lösungsmittelverluste auch mit hydrophoben Lösungsmitteln, die verzweigte gesättigte aliphatische Kohlenwasserstoffe enthalten, ausgeglichen werden.

Hydrophobe Lösungsmittel, die verzweigte gesättigte aliphatische Kohlenwasserstoffe enthalten, sind beispielsweise Kohlenwasserstoffgemische, wie Nappar® 6 (ExxonMobil Chemical, BE) oder Exxol® Heptan (ExxonMobil Chemical, BE).

Das Kohlenwasserstoffgemisch enthält vorzugsweise 2,5 bis 80 Gew.-%, besonders bevorzugt von 5 bis 50 Gew.-%, ganz besonders bevorzugt von 10 bis 20 Gew.-%, verzweigte gesättigte aliphatische Kohlenwasserstoffe.

Das Kohlenwasserstoffgemisch siedet vorzugsweise im Bereich von 50 bis 150°C, besonders bevorzugt im Bereich von 60 bis 120°C, ganz besonders bevorzugt im Bereich von 70 bis 90°C.

Der Anteil der verzweigten gesättigten aliphatischen Kohlenwasserstoffe kann gaschromatographisch bestimmt werden, beispielsweise gemäß ASTM D 5134.

Der Anteil an rückgeführtem hydrophpoben Lösungsmittel beträgt vorzugsweise von 50 bis 99 Gew.-%, besonders bevorzugt von 70 bis 95 Gew.-%, ganz besonders bevorzugt von 80 bis 90 Gew.-%.

Die Art der Rückführung unterliegt keiner Beschränkung. Beispielsweise kann das hydrophobe Lösungsmittel destillativ von den wasserabsorbierenden Polymerpartikeln entfernt werden. Vorzugsweise wird das hydrophobe Lösungsmittel aber durch Filtration von den wasserabsorbierenden Polymerpartikeln abgetrennt. Es ist aber auch möglich einen Teil des hydrophoben Lösungsmittels durch Filtration abzutrennen und einen weiteren Teil des hydrophoben Lösungsmittel abzudestillieren.

Demnach kann das hydrophobe Lösungsmittel vor der Rückführung destillativ gereinigt werden. Der Anteil des destillativ gereinigten hydrophoben Lösungsmittels beträgt vorzugsweise weniger als 80%, besonders bevorzugt weniger als 50% ganz besonders bevorzugt weniger als 20%.

In einer bevorzugten Ausführungsform der vorliegenden Erfindung taucht die Zuleitung für die Monomerlösung in die Flüssigkeit im Reaktor ein, d.h., die Zuleitung endet unterhalb der Flüssigkeitsoberfläche. Die Zuleitung endet vorzugsweise mindestens 20%, besonders bevorzugt mindestens 50%, ganz besonders bevorzugt mindestens 70%, unterhalb der Flüssigkeitsoberfläche, wobei der Abstand der Flüssigkeitsoberfläche zum tiefsten Punkt des Reaktorbodens 100% beträgt. Mittels der getauchten Zuleitung werden wasserabsorbierende Polymerpartikel mit vermindertem Gehalt an Restlösungsmittel erhalten.

Die Reaktion wird vorzugsweise unter vermindertem Druck durchgeführt, beispielsweise bei einem Druck von 800 mbar. Über den Druck kann der Siedepunkt der Reaktionsmischung auf die gewünschte Reaktionstemperatur eingestellt werden.

Die wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 60 g/g, wobei die Zentrifugenretentionskapazität (CRC) gemäß der von der EDANA (European Disposables and Nonwovens Association) empfohlenen Testmethode Nr. 441.2-02 "Centrifuge retention capacity" bestimmt wird.

Als hydrophobe Lösungsmittel sind alle dem Fachmann zum Einsatz bei der Suspensionspolymerisation bekannten Lösungsmittel einsetzbar. Bevorzugt werden aliphatische Kohlenwasserstoffe, wie n-Hexan, n-Heptan, n-Oktan, n-Nonan, n-Dekan, Cyclohexan oder Mischungen daraus, verwendet.

Unter diesen Lösungsmitteln sind jene bevorzugt, die einen Siedepunkt zwischen 50 und 150 °C aufweisen. Heptan und Cyclohexan sind besonders bevorzugt. Das Verhältnis zwischen hydrophoben Lösungsmittel und Monomerlösung beträgt bevorzugt von 0,9 bis 1,1.

Der mittlere Durchmesser der Monomerlösungstropfen beträgt vorzugsweise mindestens 200 µm, besonders bevorzugt von 250 bis 800 µm, ganz besonders von 300 bis 600 µm, wobei der Partikeldurchmesser durch Lichtstreuung bestimmt werden kann und den volumengemittelten mittleren Durchmesser bedeutet. Der Durchmesser der Monomerlösungstropfen kann über die eingetragene Rührenergie eingestellt werden.

Zur Dispergierung der wässrigen Monomerlösung im hydrophoben Lösungsmittel bzw. zur Dispergierung der entstehenden wasserabsorbierenden Polymerpartikeln werden vorzugsweise Dispergierhilfsmittel zugesetzt. Es kann sich dabei um anionische, kationische, nichtionische oder amphotere Tenside, oder natürliche, halbsynthetische oder synthetische Polymere handeln.

Anionische Tenside sind beispielsweise Natriumpolyoxyethylendodecylethersulfat und Natriumdodecylethersulfat. Ein kationisches Tensid ist beispielsweise Trimethylstearylammoniumchlorid. Ein amphoteres Tensid ist beispielsweise Carboxymethyldimethylcetylammonium. Nichtionische Tenside sind beispielsweise Saccharosefettsäureester, wie Saccharosemonostearat und Saccharosedilaurat, Sorbitanester, wie Sorbitanmonostearat, Polyoxyalkylen-Verbindungen auf Basis von Sorbitanestern, wie Polyoxyethylensorbitanmonostearat.

Natürliche oder halbsynthetische Polymere sind beispielsweise Cellulosederivate, wie Celluloseether, beispielsweise Ethylcellulose, und Celluloseester, beispielsweise Celluloseacetate. Synthetische Polymere sind beispielsweise Polyvinylalkohole, Polyvinylalkohol-Derivate, Maleinsäure-Butadien-Copolymere und quaternäre Salze, wie Styroldimethylaminoethylmethactylat.

Das Dispergierhilfsmittel wird üblicherweise im hydrophoben Lösungsmittel gelöst oder dispergiert.

Das Dispergiermittel wird in Mengen zwischen 0,01 und 10 Gew.-%, bevorzugt zwischen 0,2 und 5 Gew.-%, besonders bevorzugt zwischen 0,5 und 2 Gew.-%, bezogen auf die Monomerlösung, eingesetzt.

Über Art und Menge des Dispergierhilfsmittels kann der Durchmesser der Monomerlösungstropfen eingestellt werden.

Die im erfindungsgemäßen Verfahren einzusetzenden Monomerlösungen enthalten üblicherweise mindestens ein ethylenisch ungesättigtes Monomer a), wahlweise mindestens einen Vernetzer b), mindestens einen Initiator c) und Wasser d).

Die Monomeren a) sind vorzugsweise wasserlöslich, d.h. die Löslichkeit in Wasser bei 23 °C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Hydroxyethylacrylat, Acrylamidomethylpropansulfonsäure, Styrolsulfonsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen üblicherweise teilweise neutralisiert sind, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Kaliumhydroxid, Kaliumcarbonat oder Kaliumhydrogencarbonat sowie deren Mischungen.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Konzentration der Monomeren a) in der Monomerlösung beträgt vorzugsweise mindestens 35 Gew.-%, besonders bevorzugt mindestens 40 Gew.-%, ganz besonders bevorzugt mindestens 45 Gew.-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 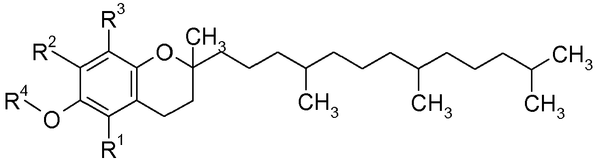 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Menge an Vernetzer b) beträgt vorzugsweise weniger als 0,5 Gew.-%, besonders bevorzugt weniger als 0,05 Gew.-%, ganz besonders bevorzugt weniger als 0,01 Gew.-%, jeweils bezogen auf das Monomer a).

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 1 Gew.-%, bezogen auf die Monomeren a).

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Wird die Polymerisation unter ausreichendem Rückfluß durchgeführt, so kann auf die Inertisierung verzichtet werden. Dabei wird der gelöste Sauerstoff zusammen mit verdampfendem Lösungsmittel aus dem Polymerisationsreaktor entfernt.

Vorteilhaft werden mehrere Rührreaktoren hintereinander geschaltet. Durch die Nachreaktion in weiteren Rührreaktoren kann der Monomerumsatz erhöht und die Rückvermischung vermindert werden.

Hierbei ist es weiterhin vorteilhaft, wenn der erste Rührreaktor nicht zu groß ist. Mit steigender Größe des Rührreaktors verbreitert sich zwangläufig die Größenverteilung der dispergierten Monomerlösungstropfen. Ein kleinerer erster Reaktor ermöglicht daher die Herstellung wasserabsorbierender Polymerpartikel mit besonders enger Partikelgrößenverteilung.

Vorteilhaft wird die erhaltene Polymerdispersion in mindestens einem weiteren Behälter azeotrop entwässert.

Die getrockneten wasserabsorbierenden Polymerpartikel weisen einen Wassergehalt von vorzugsweise unter 15 Gew.-%, insbesondere unter 10 Gew.-%, auf. Der Wassergehalt wird gemäß der von der EDANA (European Disposables and Nonwovens Association) empfohlenen Testmethode Nr. 430.2-02 "Moisture content" bestimmt.

Die Polymerpartikel können zur weiteren Verbesserung der Eigenschaften nachvernetzt werden. Geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

In einer bevorzugten Ausführungsform der vorliegenden Erfindung werden zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt.

Die Einsatzmenge an polyvalentem Kation beträgt beispielsweise 0,001 bis 0,5 Gew.-%, vorzugsweise 0,005 bis 0,2 Gew.-%, besonders bevorzugt 0,02 bis 0,1 Gew.-%. jeweils bezogen auf das Polymer.

Die Nachvernetzung kann auf zwei unterschiedlichen Wegen durchgeführt werden.

So ist es möglich die entwässerte Polymerdispersion zu filtrieren, wahlweise zu trocknen und erst die so erhaltenen wasserabsorbierenden Polymerpartikel nachzuvernetzen (Nachvernetzung A). Die Nachvernetzung wird dabei üblicherweise so durchgeführt, dass eine Lösung des Nachvernetzers und wahlweise eine Lösung des polyvalenten Kations auf die wasserabsorbierenden Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250 °C, bevorzugt 120 bis 220 °C, und besonders bevorzugt 130 bis 210 °C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Es ist aber auch möglich die Nachvernetzer und wahlweise die polyvalenten Kationen der wahlweise entwässerten Polymerdispersion zuzusetzen, vorzugsweise als wässrige Lösung (Nachvernetzung B). Anschließend wird thermisch nachvernetzt. Da die Reaktionstemperatur bei dieser Variante durch den Siedepunkt des als Dispergiermittels eingesetzten hydrophoben Lösungsmittels begrenzt ist, werden reaktive Nachvernetzer, wie Di- oder Polyepoxide, bevorzugt eingesetzt. Nach der thermischen Nachvernetzung wird wahlweise azeotrop entwässert, filtriert und getrocknet.

Das erfindungsgemäße Verfahren kann vorteilhaft auch kontinuierlich durchgeführt werden.

Die wasserabsorbierenden Polymerpartikel werden mittels der nachfolgend beschriebenen Testmethoden geprüft.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Restmonomere (Residual Monomers)

Der Gehalt an Restmonomeren der wasserabsorbierenden Polymerpartikel wird gemäß der von der EDANA (European Disposables and Nonwovens Association) empfohlenen Testmethode Nr. 410.2-02 "Residual monomers" bestimmt.

### Zentrifugenretentionskapazität (CRC Centrifuge Retention Capacity)

Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

### Absorption unter Druck (AUL0.7psi Absorbency Under Load)

Die Absorption unter Druck wird gemäß der von der EDANA (European Disposables and Nonwovens Association) empfohlenen Testmethode Nr. 442.2-02 "Absorption under pressure" bestimmt, wobei ein Gewicht mit 49 g/cm² (0,7 psi) statt eines Gewichts mit 21 g/cm² (0,3 psi) verwendet wird.

### Beispiele:

### Beispiel 1 (Vergleichsbeispiel)

Es wurden in separaten Rührkesseln folgende Lösungen angesetzt:

### Monomerlösung:

| | |
|---|---|
| 360,3 kg | (5 kmol) Acrylsäure |
| 196,4 kg | (3,5 kmol) Kaliumhydroxid |
| 0,492 kg | Polyethylenglykol-300-diacrylat |
| 538,8 kg | Wasser |

### Initiatorlösung:

| | |
|---|---|
| 0,476 kg | (2 mol) Kaliumpersulfat |
| 7,2 kg | Wasser |

### Organische Phase:

| | |
|---|---|
| 1136 kg | Cyclohexan (ca. 1630 I) |
| 11,36 kg | Ethylcellulose (enthaltend 49,5% Ethoxygruppen) |

### Durchführung:

In einem 5m³ Rührkessel ausgestattet mit Blattrührer, Heiz/Kühlmantel, Rückflusskühler und der Möglichkeit zum azeotropen Ausschleusen von Wasser wurde das Cyclohexan vorgelegt und unter Rühren die entsprechende Menge Ethylcellulose darin dispergiert. Anschließend wurde mit Stickstoff inertisiert und auf Rückfluss (80 °C) erhitzt.

Anschließend wurde innerhalb von 1,5 Stunden die Monomerlösung mit der Initiatorlösung in den Rührkessel dosiert, wobei Monomer- und Initiatorlösung kurz vor dem Eintrag in den Reaktor mittels eines statischen Mischers gemischt wurden. Während der gesamten Zeit der Monomerdosierung wurden Rückflussbedingungen beibehalten.

Der Durchmesser der Einlaufrohre war so dimensioniert, dass die Monomerlösung in dünnem, nicht turbulentem Strahl mit möglichst geringer Fließgeschwindigkeit in die organische Phase eingetragen werden konnte. Insgesamt wurden 10 Einlaufrohre verwendet. Die 10 Einlaufrohre hatten einen Abstand von 2 cm, waren senkrecht zur Tangentialrichtung der Rührwelle angeordnet und endeten 0,2 m über der Flüssigkeitsoberfläche.

Die resultierende Suspension reagierte eine Stunde nach. Anschließend wurde der Restwassergehalt der erhaltenen Polymerpartikel durch azeotropes Abtrennen von Wasser auf 40 Gew.-% gesenkt.

Nun wurden 1,0 kg Ethylenglycoldiglycidylether zugesetzt und über 2 Stunden unter Rückflussbedingungen nachreagiert. Es wurde hierbei Wasser abgetrennt, wobei ein Feststoffgehalt der Polymerpartikel von etwa 80 Gew.-% erreicht wurde.

Anschließend wurde die Suspension abgekühlt und die Polymerpartikel abfiltriert. Die weitere Trocknung erfolgt bei 60 °C im Schaufeltrockner bis zu einem Restfeuchtegehalt von 5 Gew.-%.

### Das so erhaltene Produkt hatte folgende Eigenschaften:

| | |
|---|---|
| CRC: | 35,6 g/g |
| AUL0.7psi: | 25,0 g/g |
| Restmonomere: | 20 ppm |
| Restlösungsmittel: | 0,1 ppm |
| mittlere Partikelgröße: | 380 µm |
| Partikel <200µm: | 1,0 Gew.-% |
| Partikel >600µm: | 2,0 Gew.-% |

### Beispiel 2 (Vergleichsbeispiel)

Es wurde verfahren wie unter Beispiel 1. Cyclohexan wurde durch Nappar® 6 ersetzt. Nappar® 6 ist ein Kohlenwasserstoffgemisch, enthaltend weniger als 5 Gew.-% n-Hexan, 10 bis 15 Gew.-% n-Heptan, 70 bis 80 Gew.-% Cyclohexan und 10 bis 15 Gew.-% 2-Methylpentan (Isohexan).

### Das so erhaltene Produkt hatte folgende Eigenschaften:

| | |
|---|---|
| CRC: | 35,7 g/g |
| AUL0.7psi: | 22,1 g/g |
| Restmonomere: | 23 ppm |
| Restlösungsmittel: | 0,2 ppm |
| mittlere Partikelgröße: | 390 µm |
| Partikel <200µm: | 0,9 Gew.-% |
| Partikel >600µm: | 2,3 Gew.-% |

Die Beispiele 1 und 2 zeigen, dass bei Verwendung von hydrophoben Lösungsmitteln, die verzweigte Kohlenwasserstoffe enthalten, gegenüber der Verwendung von Cyclohexan die Summe aus CRC und AUL0.7psi signifikant fällt.

### Beispiel 3 (Vergleichsbeispiel)

In einer Rührkesselkaskade wurden kontinuierlich wasserabsorbierende Polymerpartikel durch Suspensionspolymerisation hergestellt. Die Rührkesselkaskade bestand auf fünf hintereinandergeschalteten Reaktoren mit einem Innenvolumen von je 2 m³. Die Reaktoren waren mit Propellerrührer, Heizmantel und Rückflußkühler ausgestattet. Zusätzlich bestand bei jedem Reaktor die Möglichkeit Wasser auszukreisen. Die Reaktoren waren mit Stickstoff überlagert. Die Reaktionstemperatur betrug 80 °C. Der Druck in den Reaktoren wurde so eingestellt, dass der Reaktorinhalt unter Rückfluss siedete. Aus einem ersten Ansatzkessel wurde stündlich eine Mischung aus 1.600 l Cyclohexan und 11,2 kg Ethylcellulose (enthaltend 49,5 % Ethoxygruppen) in den ersten Reaktor dosiert.

Aus einem zweiten Ansatzkessel und einem dritten Ansatzkessel wurden stündlich 1.000 kg einer Mischung aus 9,85 Gew.-% Acrylsäure, 35,1 Gew.-% Kaliumacrylat, 0,045 Gew.-% Polyethylenglykol-300-diacrylat und Wasser sowie 7,0 kg einer Mischung aus 6,2 Gew.-% Kaliumpersulfat und Wasser entnommen, in einem statischen Mischer vermischt und über Einlaufrohre in den ersten Reaktor dosiert.

Die Einlaufrohre in den ersten Reaktor endeten 0,5 m unter der Flüssigkeitsoberfläche. Der Durchmesser der Einlaufrohre war so dimensioniert, dass die Monomerlösung in dünnem, nicht turbulentem Strahl mit möglichst geringer Fließgeschwindigkeit eingetragen werden konnte. Insgesamt wurden 10 Einlaufrohre verwendet. Die 10 Einlaufrohre hatten einen Abstand von 2 cm und waren senkrecht zur Tangentialrichtung der Rührwelle angeordnet.

Der Füllgrad der Reaktoren wurde durch Entnahme von Suspension konstant gehalten. Die Suspension wurde den Reaktoren auf halber Höhe des Flüssigkeitsspiegels entnommen.

Im dritten Reaktor wurden stündlich 15 kg Wasser ausgekreist.

Aus einem vierten Ansatzkessel wurden stündlich 10 kg einer Mischung aus 10 Gew.-% Ethylenglykoldiglycidylether und Wasser in den vierten Reaktor dosiert. Im vierten Reaktor wurden stündlich 90 kg Wasser ausgekreist.

Im fünften Reaktor wurden stündlich 80 kg Wasser ausgekreist.

Die Suspension wurde dem fünften Reaktor entnommen und eine Schälzentrifuge überführt. In der Schälzentrifuge wurden die wasserabsorbierenden Polymerpartikel vom Cyclohexan abgetrennt. Die abgetrennten wasserabsorbierenden Polymerpartikel wurden bei 60 °C im Schaufeltrockner bis zu einem Restfeuchtegehalt von 5 Gew.-% getrocknet.

Das in der Schälzentrifuge abgetrennte Cyclohexan wurde ohne weitere Behandlung in den ersten Ansatzkessel zurückgeführt. Verluste an Cyclohexan wurden durch Zusatz von frischem Cyclohexan ausgeglichen.

Das so erhaltene Produkt hatte nach Einstellung stabiler Zustände folgende Eigenschaften:

| | |
|---|---|
| CRC: | 34,6 g/g |
| AUL0.7psi: | 25,7 g/g |
| Restmonomere: | 1,5 ppm |
| Restlösungsmittel: | <0,1 ppm |
| mittlere Partikelgröße: | 390 µm |
| Partikel <200µm: | 0,8 Gew.-% |
| Partikel >600µm: | 1,8 Gew.-% |

### Beispiel 4

Es wurde verfahren wie unter Beispiel 3. Cyclohexan wurde durch Nappar® 6 ersetzt. Nappar® 6 ist ein Kohlenwasserstoffgemisch, enthaltend weniger als 5 Gew.-% n-Hexan, 10 bis 15 Gew.-% n-Heptan, 70 bis 80 Gew.-% Cyclohexan und 10 bis 15 Gew.-% 2-Methylpentan (Isohexan).

Das so erhaltene Produkt hatte nach Einstellung stabiler Zustände folgende Eigenschaften:

| | |
|---|---|
| CRC: | 34,8 g/g |
| AUL0.7psi: | 24,5 g/g |
| Restmonomere: | 1,8 ppm |
| Restlösungsmittel: | <0,1 ppm |
| mittlere Partikelgröße: | 405 µm |
| Partikel <200µm: | 1,0 Gew.-% |
| Partikel >600µm: | 2,0 Gew.-% |

Die Beispiele 3 und 4 zeigen, dass bei der erfindungsgemäßen Verwendung von hydrophoben Lösungsmitteln, die verzweigte Kohlenwasserstoffe enthalten, gegenüber der Verwendung von Cyclohexan die Summe aus CRC und AUL0.7psi praktisch unverändert bleibt.

## Patentansprüche

1. Verfahren zur Herstellung wasserabsorbierender Polymerpartikel durch Suspensionspolymerisation in einem hydrophoben Lösungsmittel, umfassend
i) Dosierung einer Monomerlösung mittels mindestens einer Zuleitung in einen Rührreaktor,
ii) Abtrennung des hydrophoben Lösungsmittels von den erhaltenen wasserabsorbierenden Polymerpartikeln und
iii) Rückführung des abgetrennten hydrophoben Lösungsmittels in das Verfahren,
**dadurch gekennzeichnet, dass** das hydrophobe Lösungsmittel zumindest teilweise durch frisches hydrophobes Lösungsmittel ersetzt wird, das frische hydrophobe Lösungsmittel zumindest teilweise ein Kohlenwasserstoffgemisch ist und das Kohlenwasserstoffgemisch mindestens 1 Gew.-% verzweigte gesättigte aliphatische Kohlenwasserstoffe enthält.

2. Verfahren gemäß Anspruch 1, **dadurch gekennzeichnet, dass** das Kohlenwasserstoffgemisch im Bereich von 50 bis 150 °C siedet.

3. Verfahren gemäß Anspruch 1 oder 2, **dadurch gekennzeichnet, dass** weniger als 80 % des rückgeführten hydrophoben Lösungsmittels während oder nach der Abtrennung ii) und vor der Rückführung iii) destillativ gereinigt wird.

4. Verfahren gemäß einem der Ansprüche 1 bis 3, **dadurch gekennzeichnet, dass** die Zuleitung im Rührreaktor unterhalb der Flüssigkeitsoberfläche endet.

5. Verfahren gemäß einem der Ansprüche 1 bis 4, **dadurch gekennzeichnet, dass** bei der Suspensionspolymerisation ein Dispergierhilfsmittel verwendet wird.

6. Verfahren gemäß einem der Ansprüche 1 bis 5, **dadurch gekennzeichnet, dass** die Reaktionsmischung in mindestens einem weiteren Rührreaktor nachreagiert.

7. Verfahren gemäß einem der Ansprüche 1 bis 6, **dadurch gekennzeichnet, dass** die Reaktionsmischung azeotrop entwässert, filtriert, getrocknet und nachvernetzt wird.

8. Verfahren gemäß einem der Ansprüche 1 bis 6, **dadurch gekennzeichnet, dass** die Reaktionsmischung azeotrop entwässert, nachvernetzt, erneut azeotrop entwässert, filtriert und getrocknet wird.

9. Verfahren gemäß einem der Ansprüche 1 bis 8, **dadurch gekennzeichnet, dass** die Suspensionspolymerisation kontinuierlich durchgeführt wird.

10. Verfahren gemäß einem der Ansprüche 1 bis 9, **dadurch gekennzeichnet, dass** die wasserabsorbierenden Polymerpartikel zu mindestens 50 mol-% zumindest teilweise neutralisierter polymerisierter Acrylsäure enthalten.

11. Verfahren gemäß einem der Ansprüche 1 bis 10, **dadurch gekennzeichnet, dass** die wasserabsorbierenden Polymerpartikel weniger als 0,1 Gew.-% eines einpolymerisierten Vernetzers enthalten.

12. Verfahren gemäß einem der Ansprüche 1 bis 11, **dadurch gekennzeichnet, dass** die Monomerlösung mindestens 35 Gew.-% Monomere a) enthält.

13. Verfahren gemäß einem der Ansprüche 1 bis 12, **dadurch gekennzeichnet, dass** die wasserabsorbierenden Polymerpartikel eine Zentrifugenretentionskapazität von mindestens 15 g/g aufweisen.

## Claims

1. A process for producing water-absorbing polymeric particles by a suspension polymerization in a hydrophobic solvent, comprising
i) metering a monomer solution by means of at least one feed line into a stirred reactor,
ii) removing the hydrophobic solvent from the resulting water-absorbing polymeric particles, and
iii) recycling the removed hydrophobic solvent into the process,
wherein the hydrophobic solvent is at least partly replaced by fresh hydrophobic solvent, the fresh hydrophobic solvent is at least partly a hydrocarbon mixture and the hydrocarbon mixture comprises at least 1% by weight of branched saturated aliphatic hydrocarbons.

2. The process according to claim 1 wherein the hydrocarbon mixture boils in the range from 50 to 150°C.

3. The process according to claim 1 or 2 wherein less than 80% by weight of the recycled hydrophobic solvent is distillatively purified during or after the removing ii) and before the recycling iii).

4. The process according to any one of claims 1 to 3 wherein the feed line in the stirred reactor ends below the liquid surface.

5. The process according to any one of the claims 1 to 4 wherein a dispersing assistant is used in the suspension polymerization.

6. The process according to any one of the claims 1 to 5 wherein the reaction mixture is supplementarily reacted in at least one further stirred reactor.

7. The process according to any one of the claims 1 to 6 wherein the reaction mixture is azeotropically dewatered, filtered, dried and postcrosslinked.

8. The process according to any one of the claims 1 to 6 wherein the reaction mixture is azeotropically dewatered, postcrosslinked, azeotropically dewatered again, filtered and dried.

9. The process according to any one of the claims 1 to 8 wherein the suspension polymerization is carried out continuously.

10. The process according to any one of the claims 1 to 9 wherein the water-absorbing polymeric particles comprise at least 50 mol% of at least partially neutralized polymerized acrylic acid.

11. The process according to any one of the claims 1 to 10 wherein the water-absorbing polymeric particles comprise less than 0.1% by weight of an interpolymerized crosslinker.

12. The process according to any one of the claims 1 to 11 wherein the monomer solution comprises at least 35% by weight of monomers a).

13. The process according to any one of the claims 1 to 12 wherein the water-absorbing polymeric particles have a Centrifuge Retention Capacity of at least 15 g/g.

## Revendications

1. Procédé pour la production de particules de polymère absorbant l'eau, par polymérisation en suspension dans un solvant hydrophobe, comprenant
i) l'introduction par addition dosée d'une solution de monomère, par au moins un conduit d'alimentation, dans un réacteur à agitation,
ii) séparation du solvant hydrophobe d'avec les particules de polymère absorbant l'eau obtenues et
iii) recyclage dans le processus du solvant hydrophobe séparé,
**caractérisé en ce qu'**on remplace au moins en partie le solvant hydrophobe par du solvant hydrophobe neuf, le solvant hydrophobe neuf est au moins un paryie un mélange d'hydrocarbures et le mélange d'hydrocarbures contient au moins 1 % en poids d'hydrocarbures aliphatiques saturés.

2. Procédé selon la revendication 1, **caractérisé en ce que** le mélange d'hydrocarbures a un point d'ébullition dans la plage de 50 à 150 °C.

3. Procédé selon la revendication 1 ou 2, **caractérisé en ce que** pendant ou après la séparation ii) et avant le recyclage iii) on purifie par distillation moins de 80 % du solvant hydrophobe recyclé.

4. Procédé selon l'une quelconque des revendications 1 à 3, **caractérisé en ce que** le conduit d'alimentation dans le réacteur à agitation débouche au-dessous de la surface du liquide.

5. Procédé selon l'une quelconque des revendications 1 à 4, **caractérisé en ce que** dans la polymérisation en suspension on utilise un adjuvant de dispersion.

6. Procédé selon l'une quelconque des revendications 1 à 5, **caractérisé en ce que** le mélange réactionnel post-réagit dans au moins un autre réacteur à agitation.

7. Procédé selon l'une quelconque des revendications 1 à 6, **caractérisé en ce que** le mélange réactionnel est déshydraté par distillation azéotropique, filtré, séché et post-réticulé.

8. Procédé selon l'une quelconque des revendications 1 à 6, **caractérisé en ce que** le mélange réactionnel est déshydraté par distillation azéotropique, post-réticulé, encore déshydraté par distillation azéotropique, filtré et séché.

9. Procédé selon l'une quelconque des revendications 1 à 8, **caractérisé en ce que** la polymérisation en suspension est effectuée en continu.

10. Procédé selon l'une quelconque des revendications 1 à 9, **caractérisé en ce que** les particules de polymère absorbant l'eau contiennent à raison d'au moins 50 % en moles d'acide acrylique polymérisé, au moins partiellement neutralisé.

11. Procédé selon l'une quelconque des revendications 1 à 10, **caractérisé en ce que** les particules de polymère absorbant l'eau contiennent moins de 0,1 % en poids d'un agent de réticulation incorporé par polymérisation.

12. Procédé selon l'une quelconque des revendications 1 à 11, **caractérisé en ce que** la solution de monomères contient au moins 35 % en poids de monomères a).

13. Procédé selon l'une quelconque des revendications 1 à 12, **caractérisé en ce que** les particules de polymère absorbant l'eau présentent un pouvoir de rétention centrifuge d'au moins 15 g/g.
